# EUROPEAN PATENT APPLICATION

(11) **EP 3 392 816 A1**
(43) Date of publication of application: **24.10.2018**
(21) Application number: 18167752.7
(22) Date of filing: 17.04.2018
(51) Int. Cl.: G06Q 30/00

(54) **TRIAL SYSTEM, TRIAL METHOD, TRIAL PROCESSING DEVICE, AND TRIAL PROCESSING METHOD**

(30) Priority: 18.04.2017 JP 2017081830
(71) Applicant: Toshiba TEC Kabushiki Kaisha, Tokyo 141-8562 (JP)
(72) Inventor: WATANABE, Keiji, Shinagawa-ku,, Tokyo 141-8562 (JP)
(74) Representative: Takeuchi, Maya

(57) **Abstract**

A system for managing trial commodity usage includes a first server that receives a request for a commodity trial and sends a commodity-for-trying to a specified trial place. The first server transmits a trial request command which includes a commodity identification, requester identification, and a sale form flag indicating whether the commodity-for-trying is a trial commodity or a selling commodity. The second server receives the trial request, and stores the commodity identification in association with the requester identification. The second server accepts a selection input indicating, based on a trial of the commodity-for-trying, whether the requestor will purchase the commodity. The second server determines whether the commodity-for-trying should be kept by the requestor. The second server transmits treatment information indicating whether the requestor will purchase the commodity and whether the commodity-for-trying should be kept by the requestor.

## Description

### FIELD

The present invention relates to the field of a sales system in general, and embodiments described herein relate in particular to a trial system, a trial method, a trial processing device, and a trial processing method.

### BACKGROUND

In recent years, shopping using the Internet is widespread. A decision to purchase commodities, such as clothes and footwear, is made after performing a trial (fitting) of the commodity. For example, a seller sends a commodity, which is ordered by a consumer via the Internet, or a trial commodity corresponding to the commodity (in either case, a "commodity-for-trying") to a consumer's house or the like. The consumer performs a trial use on the commodity-for-trying, and determines whether or not to purchase. Furthermore, in a case of determining to purchase, the consumer notifies the seller that the consumer will purchase the commodity. If the seller receives contact from the consumer that the consumer will purchase the commodity, the seller can send a commodity when the trial commodity is returned. With such a sale method, the consumer determines whether or not to purchase the commodity after the consumer performs trial on the commodity-for-trying, and thus it is possible to purchase the commodity with a peace of mind.

However, in contrast, if the consumer who ends performing trial on the commodity-for-trying, does not purchase the commodity, time is taken to return the commodity-for-trying to the seller. Specifically, if the consumer determines a commodity to be purchased among a plurality of items which are sold by different sellers after performing trial, the consumer should return each commodity-for-trying to the respective sellers after performing trial, and thus a great deal of time is taken.

To solve such problem, there is provided a system for managing trial commodity usage, the system comprising: a first server provided in a store that receives a request for a commodity trial from a requestor and sends a commodity-for-trying that is a commodity corresponding to the request to a specified trial place; a second server provided in the specified trial place, wherein: the first server is configured to: transmit a trial request command which includes: a commodity identification corresponding to the commodity, requester identification corresponding to the requester, to the second server, and a sale form flag indicating whether the commodity-for-trying corresponding to the request and sent to the specified trial place is a trial commodity or a selling commodity and the second server is configured to: receive the trial request command transmitted from the first server, store the commodity identification included in the received trial request command, in association with the requester identification, accept a selection input indicating, based on a trial of the commodity-for-trying sent to the specified trial place, whether the requestor will purchase the commodity, determine, based on the sale form flag and the selection input corresponding to the commodity, whether the commodity-for-trying should be kept by the requestor or returned to the store, and transmit, to the first server, treatment information indicating whether the requestor will purchase the commodity and whether the commodity-for-trying should be kept by the requestor or returned to the store.

Preferably, the second server is further configured to: store, in correspondence with the requestor identification, an arrival state flag indicating whether the commodity-for-trying is received at the specified trial place, and a message destination for the requestor, and when the arrival state flag indicates that the commodity-for-trying is received at the specified trial place, transmit a message to the message destination indicating that the trial of the commodity-for-trying is available for the trial at the specified trying place.

Preferably still, the second server is further configured to: receive one or more additional trial request commands that each include a different commodity identification and the same requestor identification, and transmit the message when the arrival state flag, for each commodity information stored in correspondence with the requestor information, indicates that the trial of the commodity-for-trying is available for the trial at the specified trying place.

Preferably yet, the second server is further configured to: receive a commodity arrival input when the commodity-for-trying arrives at the selected trying place, the arrival state flag being set to indicate that the commodity-for-trying is received at the specified trial place when the commodity arrival input is received.

Suitably, when the sale form flag indicates that the commodity-for-trying is the trial commodity, the second server determines that the commodity-for-trying should be returned to the store regardless of the selection input.

Suitably still, when the sale form flag indicates that the commodity-for-trying is the selling commodity and when the selection input indicates the requestor will purchase the commodity, the second server determines that the commodity-for-trying should be kept by the requestor.

Suitably yet, when the sale form flag indicates that the commodity-for-trying is the selling commodity and when the selection input indicates the requestor will not purchase the commodity, the second server determines that the commodity-for-trying should be returned to the store.

Typically, when the sale form flag indicates that the commodity-for-trying is the trial commodity and when the selection input indicates the requestor will purchase the commodity, the treatment information indicates that the store should send the commodity to the requestor.

Typically still, the store receives the request for the commodity trial via a website in accordance with access from a user terminal corresponding to the requestor.

Typically yet, the store receives the request for the commodity trial from a point of sales terminal located in the store.

The invention also relates to a method for managing trial commodity usage, the method comprising: receiving a request for a commodity trial from a requestor, the request including a commodity identification corresponding to a commodity, a requestor identification corresponding to the requestor, and a specified trial place; sending, to the specified trial place, a commodity-for-trying that is the a commodity corresponding to the request; generating a trial request command which includes: the commodity identification corresponding to the commodity, requester identification corresponding to the requester, and a sale form flag indicating whether the commodity-for-trying corresponding to the request and sent to the specified trial place is a trial commodity or a selling commodity; storing the commodity identification included in the received trial request command, in association with the requester identification; accepting, at the specified trial place, a selection input indicating, based on a trial of the commodity-for-trying sent to the specified trial place, whether the requestor will purchase the commodity; determining, based on the sale form flag and the selection input corresponding to the commodity, whether the commodity-for-trying should be kept by the requestor or returned; and outputting treatment information indicating whether the requestor will purchase the commodity and whether the commodity-for-trying should be kept by the requestor or returned.

Preferably, the method further comprises: storing, in correspondence with the requestor identification, an arrival state flag indicating whether the commodity-for-trying is received at the specified trial place, and a message destination for the requestor; and when the arrival state flag indicates that the commodity-for-trying is received at the specified trial place, outputting a message to the message destination indicating that the trial of the commodity-for-trying is available for the trial at the specified trying place.

Preferably still, the method further comprises: receiving one or more additional trial request commands that each include a different commodity identification and the same requestor identification; and outputting the message when the arrival state flag, for each commodity information stored in correspondence with the requestor information, indicates that the trial of the commodity-for-trying is available for the trial at the specified trying place.

Preferably yet, the method further comprises: receiving a commodity arrival input when the commodity-for-trying arrives at the selected trying place, the arrival state flag being set to indicate that the commodity-for-trying is received at the specified trial place when the commodity arrival input is received.

Suitably, in the method, when the sale form flag indicates that the commodity-for-trying is the trial commodity, the commodity-for-trying should be returned to the store regardless of the selection input.

Suitably still, in the method, when the sale form flag indicates that the commodity-for-trying is the selling commodity and when the selection input indicates the requestor will purchase the commodity, the commodity-for-trying should be kept by the requestor.

Suitably yet, in the method, when the sale form flag indicates that the commodity-for-trying is the selling commodity and when the selection input indicates the requestor will not purchase the commodity, the commodity-for-trying should be returned to the store.

Typically, in the method, when the sale form flag indicates that the commodity-for-trying is the trial commodity and when the selection input indicates the requestor will purchase the commodity, the treatment information indicates that the store should send the commodity to the requestor.

Typically still, in the method, the request for the commodity trial is received via a website in accordance with access from a user terminal corresponding to the requestor.

Typically yet, in the method, the request for the commodity trial is received from a point of sales terminal located in the store.

The invention also concerns a non-transitory computer readable medium storing a program causing a computer to execute the above method.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a configuration of a trial system according to one embodiment.
FIG. 2 is a block diagram illustrating a configuration of a store server.
FIG. 3 is a diagram illustrating a data record stored in a commodity database.
FIG. 4 is a diagram illustrating a data record stored in a trial history database.
FIG. 5 is a block diagram illustrating a configuration of a trial place server.
FIG. 6 is a diagram illustrating a first state of an example of data stored in a trial management file.
FIG. 7 is a diagram illustrating a second state of the example of the data stored in the trial management file.
FIG. 8 is a diagram illustrating a third state of the example of the data stored in the trial management file.
FIG. 9 is a diagram illustrating a fourth state of the example of the data stored in the trial management file.
FIG. 10 is a diagram illustrating an example of principal data being interchanged between a user, a store, and a trial place, and movement of a commodity.
FIG. 11 is a flowchart illustrating a process performed by the store server.
FIGS. 12-14 are flowcharts illustrating a process performed by a processor of the trial place server.
FIG. 15 is a diagram illustrating an example of a screen displayed on a display device of the trial place server.
FIG. 16 is a diagram illustrating an example of another screen displayed on the display device of the trial place server.

### DETAILED DESCRIPTION

A system for managing trial commodity usage includes a first server provided in a store that receives a request for a commodity trial from a requestor and sends a commodity-for-trying that is a commodity corresponding to the request to a specified trial place. A second server is provided in the specified trial place. The first server transmits a trial request command which includes: a commodity identification corresponding to the commodity, requester identification corresponding to the requester, to the second server, and a sale form flag indicating whether the commodity-for-trying corresponding to the request and sent to the specified trial place is a trial commodity or a selling commodity. The second server receives the trial request command transmitted from the first server, and stores the commodity identification included in the received trial request command, in association with the requester identification. The second server accepts a selection input indicating, based on a trial of the commodity-for-trying sent to the specified trial place, whether the requestor will purchase the commodity. The second server determines, based on the sale form flag and the selection input corresponding to the commodity, whether the commodity-for-trying should be kept by the requestor or returned to the store. The second server transmits, to the first server, treatment information indicating whether the requestor will purchase the commodity and whether the commodity-for-trying should be kept by the requestor or returned to the store.

Hereinafter, embodiments of a trial system, trial method, a trial processing device, and a trial processing method will be described with reference to the accompanying drawings.

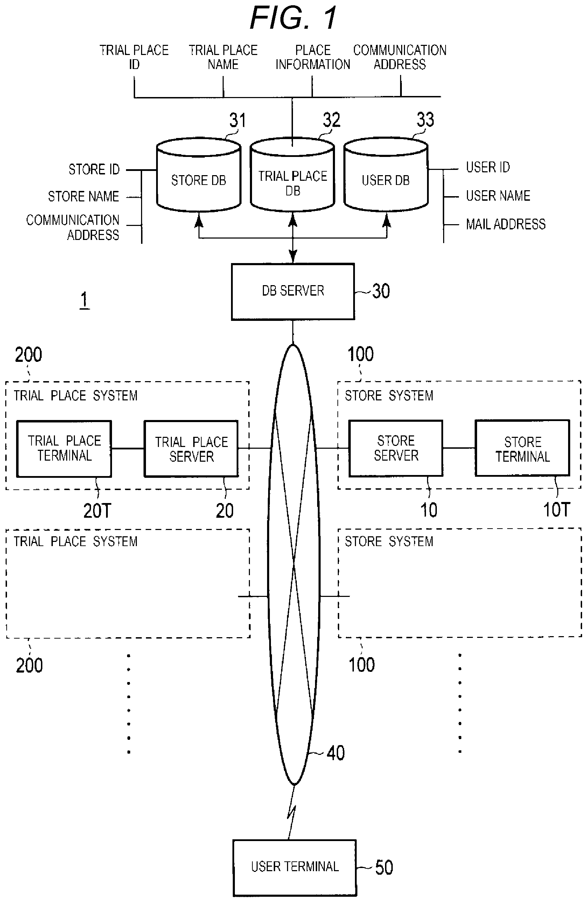

FIG. 1 is a diagram illustrating a configuration of a trial system 1. The trial system 1 includes a store server (first server) 10 of a store system 100, a trial place server (second server) 20 of a trial place system 200, and a database server 30. The store server 10, the trial place server 20, and the database server 30 are respectively connected to a network 40 such as the Internet.

The store system 100 is provided in each store in which the trial system 1 is used. The store sells commodities, such as clothes and footwear, on which a large number of consumers desire to perform trial (fitting)), at a shopping location. Furthermore, the store receives requests from the consumers and, in response, sends commodities on which the consumers will perform a trial use to predetermined trial places. The store may be a store which sells the commodities not only through the shopping site but also in a physical store.

The store system 100 includes the store server 10 and a store terminal 10T. The store server 10 and the store terminal 10T are connected via, for example, a Local Area Network (LAN). The store server 10 is a web server used to operate a shopping site using the network 40. The store server 10 accepts an order for a commodity from a consumer (hereinafter, referred to as a user) who uses the shopping site.

The user uses a user terminal 50, such as a personal computer, a smart phone, or a tablet terminal, on which a browser is included, and logs onto the shopping site which is established by the store via the network 40. Therefore, the user performs user registration in advance and acquires a user ID which is necessary to log in. The user ID is common to shopping sites which are respectively established by respective stores. That is, it is possible for the user to use the user ID, which is acquired by performing the user registration, in order to log in any one of the shopping sites.

The user who logs in places an order by operating the user terminal 50 if there is a commodity the user wants to purchase among commodities which are sold through the shopping site. If the order is placed, the user determines whether or not to wait to purchase the commodity until after a trial. If the trial of the commodity is requested, the user, that is, a requester operates the user terminal 50, and registers a trial place for performing the trial on the commodity, and a trial date.

The store terminal 10T outputs information relevant to an order which is received through the shopping site that is established by the store server 10. An output method is not particularly restricted. Screen display output on a display device, such as a liquid crystal display, may be performed or printing output on a printing medium by a printer may be performed. It is possible to use a personal computer as store terminal 10T. Alternatively, a Point of Sales (POS) terminal, which is installed in a physical store, may be used as the store terminal 10T.

A salesclerk in a store obtains commodity order content received through the shopping site using information output from the store terminal 10T. Furthermore, if there is a trial request from the user, the salesclerk sends a commodity, on which the requesting user will perform trial, to a trial place registered by the user, on a trial date. The commodity to be sent may be a commodity to be actually sold, a so-called selling commodity, or may be a commodity prepared to perform trial, a so-called trial commodity. The commodity to be sent, whether indicated as the selling commodity or the trial commodity, may be referred to as a "commodity-for-trying."

The trial place system 200 is provided in each trial place. The trial place is a location prepared for the user to perform trial on the commodity ordered through the shopping site. It is possible for the user to collectively perform trial on a plurality of commodities, which are ordered through different shopping sites, in a trial place determined by the user. That is, the trial place is common to respective stores. A location of the trial place is not particularly limited. For example, the trial place may be inside a store such as a department store or a shopping center, or may be in a public place such as a train station or a park.

The trial place system 200 includes the trial place server 20 and a trial place terminal 20T. The trial place server 20 and the trial place terminal 20T are connected via, for example, the LAN. The trial place server 20 manages information relevant to the user who performs trial on the commodity at the trial place in which the trial place server 20 is provided, and information relevant to the commodity on which trial will be performed. The information relevant to the user and the information relevant to the commodity are acquired from the store server 10 which receives the order from the user.

The trial place terminal 20T inputs the information relevant to the commodity delivered from the store, for example, identification information of the commodity, identification information of the store which sends the commodity, identification information of the user who performs trial on the commodity, and the like. Scanning input of a code symbol, such as a two-dimensional code, or data input through contactless communication using a Radio Frequency (RF) identifier tag may be used as an input method. If the commodity arrives, an attendant in the trial place operates the trial place terminal 20T and inputs information relevant to the arrived commodity. The trial place terminal 20T transmits the information relevant to the arrived commodity to the trial place server 20. The trial place server 20 manages storing the commodities, on which the user will perform trial, based on the information received from the trial place terminal 20T. Furthermore, if the storing is completed, the trial place server 20 notifies the relevant user of the completion of the storing by e-mail.

The trial place terminal 20T displays a list of commodities, on which trial will be performed, with respect to the user who visits the trial place. In addition, the trial place terminal 20T accepts a selection input indicative of whether to confirm or cancel the order for the commodity on which the user performed trial. It is possible to realize the function using, for example, a touch panel. Alternatively, it is possible to realize the function using the display device, such as the liquid crystal display, and an input device such as a keyboard or a mouse. The trial place server 20 notifies the store server 10 of information indicative of a trial result (i.e., confirm or cancel the order) based on the selection input accepted by the trial place terminal 20T.

The selling commodity and the trial commodity, on which trial will be performed, are handled differently in the trial place. In a case of the selling commodity, it is possible for the user to take the commodity as it is after the trial. However, in a case of the trial commodity, it is not possible for the user to take the commodity after the trial, even though the user wishes to confirm purchase of the commodity. The trial commodity is returned to a store in a manner similar to a commodity which is returned by the user. The attendant in the trial place is in charge of such an operation of returning the trial commodity. The user is not involved in the operation of returning the trial commodity.

The database server 30 manages a store database 31, a trial place database 32, and a user database 33. That is, the database server 30 searches relevant databases 31, 32, and 33 for a request from another server (the store server 10 or the trial place server 20), and returns data acquired as a result of the search. The respective databases 31, 32, and 33 may be stored in a storage device inside the database server 30 or in a storage device external to the database server 30. Some databases may be stored in the inside storage device and remaining databases may be stored in the external storage device.

The store database 31 stores a store record generated for each store. The store record includes a store ID, a store name, a communication address, and the like. The store ID is a unique code (store identification information) assigned to each store in order to individually identify each store which utilizes the trial system 1. The store name is a name of the store. The communication address is an Internet address (IP address) assigned to the store server 10 in the store.

The trial place database 32 stores a trial place record generated for each trial place. The trial place record includes a trial place ID, a trial place name, location information, a communication address, and the like. The trial place ID is a unique code (trial place identification information) assigned to each trial place in order to individually identify each trial place. The trial place name is a name of the trial place. The location information is information relevant to a location of the trial place. The location information includes an address, a nearby station name, a map, and the like. The communication address is an IP address assigned to the trial place server 20 in the trial place.

The user database 33 stores a user record generated for each user. The user record includes a user ID, a user name, a mail address, and the like. The user ID is a unique code (user identification information) assigned to the user who performs the user registration. The user name is a name of the user. The mail address is an e-mail address of the user.

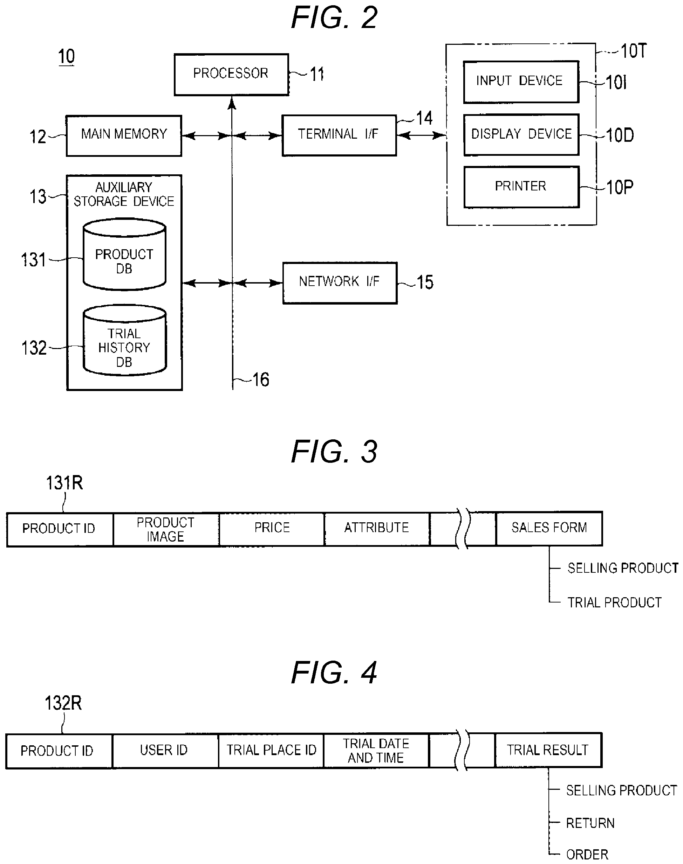

FIG. 2 is a block diagram illustrating a configuration of the store server 10. The store server 10 includes a processor 11, a main memory 12, an auxiliary storage device 13, a terminal interface 14, a network interface 15, and a system transmission path 16. The system transmission path 16 includes an address bus, a data bus, and the like. The store server 10 functions as a computer by connecting the processor 11 to the respective components through the system transmission path 16.

The processor 11 includes a Central Processing Unit (CPU) or a Micro Processing Unit (MPU), and corresponds to a central processor of the computer. The processor 11 controls respective components in order to realize various functions as the store server 10 according to an operating system or an application program.

The main memory 12 corresponds to a main storage device of the computer. The main memory 12 includes a nonvolatile memory area and a volatile memory area. The main memory 12 stores the operating system and the application program in the nonvolatile memory area. In addition, the main memory 12 stores data which is necessary for the processor 11 to perform a process of controlling the respective units in the nonvolatile or volatile memory area. The main memory 12 uses the volatile memory area as a work area in which data is appropriately rewritten by the processor 11.

The auxiliary storage device 13 corresponds to an auxiliary storage device of the computer. For example, a Hard Disc Drive (HDD), a Solid State Drive (SSD), an Electric Erasable Programmable Read-Only Memory (EEPROM), or the like is used as the auxiliary storage device 13. The auxiliary storage device 13 stores data used by the processor 11 to perform various processes and data generated due to the process in the processor 11. The auxiliary storage device 13 may also store the application program.

The terminal interface 14 is an interface used to perform data communication between the terminal interface 14 and the store terminal 10T which are connected via the LAN. The store terminal 10T includes an input device 10I, a display device 10D, a printer 10P, and the like. The input device 10I includes a keyboard, a mouse, and the like. The display device 10D includes a liquid crystal display, an LED display, and the like. A touch panel may be used as the input device 10I and the display device 10D. The terminal interface 14 receives data, which is input via the input device 10I, from the store terminal 10T. In addition, the terminal interface 14 transmits data displayed on the display device 10D or data printed by the printer 10P to the store terminal 10T.

The network interface 15 is an interface used to perform data communication between the database server 30, the trial place server 20, the user terminal 50, and the like which are connected via the network 40.

The store server 10, configured as described above, includes a commodity database 131 and a trial history database 132 in the auxiliary storage device 13. The commodity database 131 stores data relevant to a commodity which is sold through the shopping site. The trial history database 132 stores data relevant to a commodity on which the user performed a trial.

FIG. 3 illustrates a configuration of a data record 131R stored in the commodity database 131. As illustrated in the drawing, the data record 131R includes respective pieces of information including a commodity ID, a commodity image, price, an attribute, and a sales form. The commodity ID is a unique code (commodity identification information) assigned to each commodity in order to individually identify each of the commodities sold through the shopping site. It is not necessary that the commodity IDs given to the respective commodities sold through the shopping sites of respective stores coincide with each other. The commodity image is an image of the commodity provided through the shopping site. The price is sale price of the commodity. The attribute information indicates various attributes included in the commodity. For example, in a case of clothes, a size, a color, a brand, and the like are included in the attribute information. The sales form identifies whether the commodity corresponds to the selling commodity or the trial commodity. Therefore, different commodity IDs are assigned to trial commodities and selling commodities. Data records 131R for respective commodities are stored in the commodity database 131.

FIG. 4 illustrates a configuration of a data record (hereinafter, referred to as a trial history record) 132R stored in a trial history database 132. As illustrated in the drawing, the trial history record 132R includes various pieces of information including the commodity ID, a user ID, a trial place ID, a trial date and time, and a trial result. The commodity ID is information used to identify the commodity on which the user performed the trial. The user ID is information used to identify the user who performed the trial on the commodity. The trial place ID is information used to identify a trial place which is used for the user to perform the trial. The trial date and time is a date and time at which the user performs the trial on the commodity in the trial place. The trial result is information used to identify whether the user purchases the commodity on which the trial is performed, or returns the commodity. If the user purchases the commodity on which the trial is performed, as described above, management processing becomes different according to whether the commodity is the selling commodity or the trial commodity. Therefore, information relevant to the trial result includes "sale" which indicates that the commodity is the selling commodity and the user takes the commodity, "order" which indicates that the commodity is the trial commodity and is sent to the user afterwards, and "return" which indicates that a person who performed trial on the commodity requests to return the commodity.

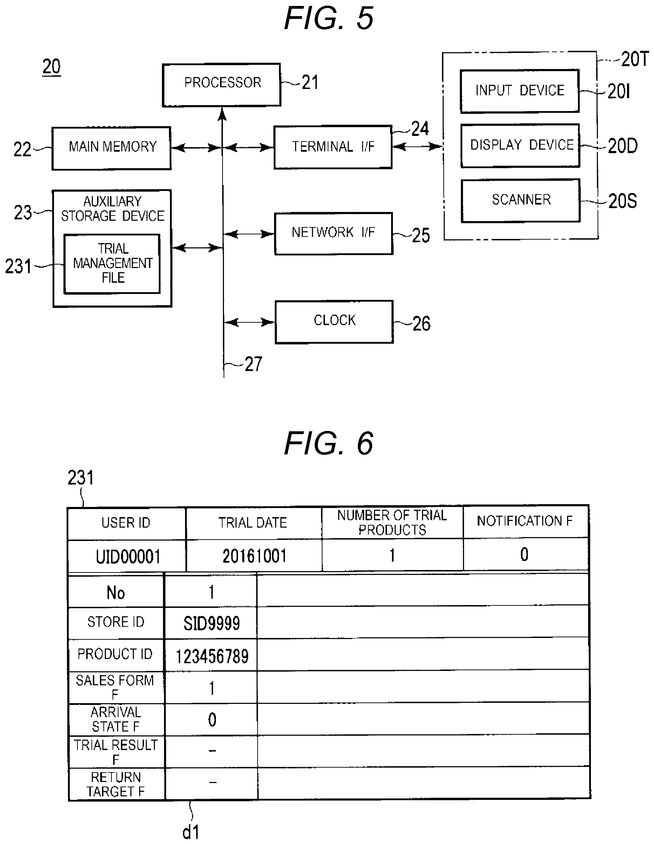

FIG. 5 is a block diagram illustrating a configuration of the trial place server 20. The trial place server 20 includes a processor 21, a main memory 22, an auxiliary storage device 23, a terminal interface 24, a network interface 25, a clock 26, and a system transmission path 27. The system transmission path 27 includes an address bus, a data bus, and the like. The trial place server 20 functions as a computer by connecting the processor 21 to the respective components via the system transmission path 27.

The processor 21 includes a CPU or an MPU, and corresponds to a central processor of the computer. The processor 21 controls respective units in order to realize various functions as the trial place server 20 according to an operating system or an application program.

The main memory 22 corresponds to a main storage device of the computer. The main memory 22 includes a nonvolatile memory area and a volatile memory area. The main memory 22 stores an operating system and an application program in the nonvolatile memory area.

In addition, the main memory 22 stores data, which is necessary for the processor 21 to perform a process for controlling the respective units, in the nonvolatile or volatile memory area. The main memory 22 uses the volatile memory area as a work area in which data is appropriately rewritten by the processor 21.

The auxiliary storage device 23 corresponds to an auxiliary storage device of the computer. For example, an HDD, an SSD, an EEPROM, or the like is used as the auxiliary storage device 23. The auxiliary storage device 23 stores data used when the processor 21 performs various processes and data generated in the processes performed by the processor 21. The auxiliary storage device 23 may store the application program.

The terminal interface 24 is an interface used to perform data communication between the terminal interface 24 and the trial place terminal 20T which are connected via the LAN. The trial place terminal 20T includes an input device 20I, a display device 20D, a scanner 20S, and the like. The input device 20I includes a keyboard, a mouse, and the like. The display device 20D includes a liquid crystal display, an LED display, and the like. A touch panel may be used as the input device 20I and the display device 20D. The scanner 20S reads code symbols, such as a one-dimensional code (for example, a barcode or the like) and a two-dimensional code (for example, a QR code (registered trademark)). The terminal interface 24 receives data, which is input via the input device 20I, from the trial place terminal 20T. In addition, the terminal interface 24 transmits data, which is displayed on the display device 20D, to the trial place terminal 20T. Furthermore, the terminal interface 24 receives scanning data, which is read by the scanner 20S, from the trial place terminal 20T.

The network interface 25 is an interface used to perform data communication between the database server 30, the store server 10, the user terminal 50, and the like which are connected to the network 40.

The clock 26 functions as a time information source for the trial place server 20. The processor 21 receives a current date and time based on time information clocked by the clock 26.

The trial place server 20 which has the above configuration stores a trial management file 231 in the auxiliary storage device 23. The trial management file 231 is used to manage the information relevant to the user who performs the trial on the commodity using the trial place where the trial place server 20 is provided, and the information relevant to the commodity on which the trial will be performed.

FIGS. 6 to 9 illustrate examples of data stored in the trial management file 231. As illustrated in FIGS. 6 to 9, trial management data corresponding to a user ID, a trial date, the number of trial commodities, a notification flag, and the number of trial commodities is stored in the trial management file 231. The number of trial commodities is the number of commodities on which the user identified by using the user ID performs the trial in the trial place on the trial date. The notification flag is one-bit information for indicating whether or not to provide a notification to the user that the commodities, on which trial will be performed, are stored. In the embodiment, a state in which the notification is not provided is set to "0" and a state in which the notification is provided is set to "1". Here, the user ID, the trial date, the number of trial commodities, and the notification flag form the information relevant to the user who performs the trial on the commodities using the trial place.

The trial management data includes respective pieces of information of a serial number, a store ID, a commodity ID, a sale form flag, an arrival state flag, a trial result flag, and a return target flag. The serial number is a consecutive number in which an initial value is "1". The sale form flag is one-bit information indicative of a sales status of the commodity identified with the commodity ID in the store identified with the store ID. In the embodiment, the selling commodity is set to "0" and the trial commodity is set to "1". The arrival state flag is one-bit information indicative of whether or not the commodity identified with the commodity ID arrives in the trial place. In the embodiment, non-arrival is set to "0" and completion of arrival is set to "1". The trial result flag is one-bit information indicative of whether or not the user purchases the commodity as a result of the trial performed by the user on the commodity identified by using the commodity ID. In the embodiment, non-purchase is set to "0" and purchase is set to "1". The return target flag is one-bit information for indicating whether the commodity identified with the commodity ID is a return target to be returned to the store. In the embodiment, commodities other than the return target are set to "0", and the return target is set to "1". Accordingly, the trial management data includes the information relevant to the commodity on which the user performs the trial.

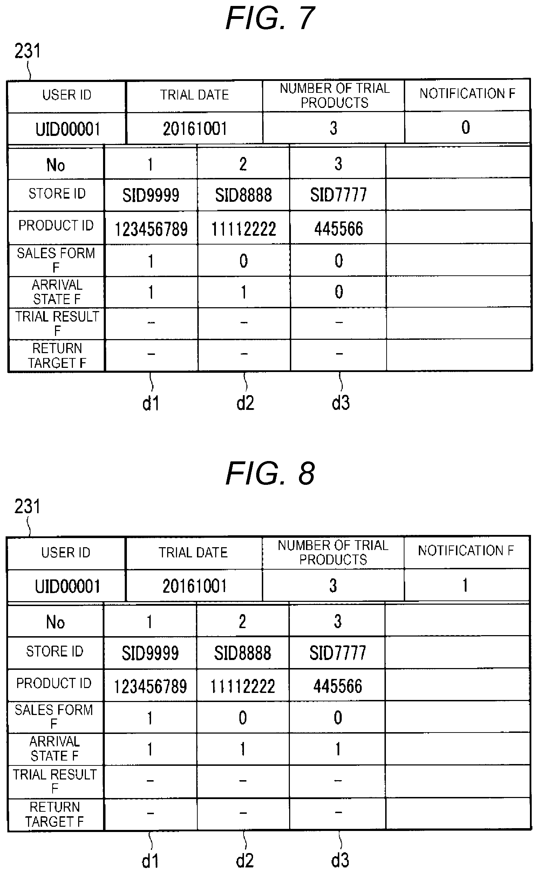

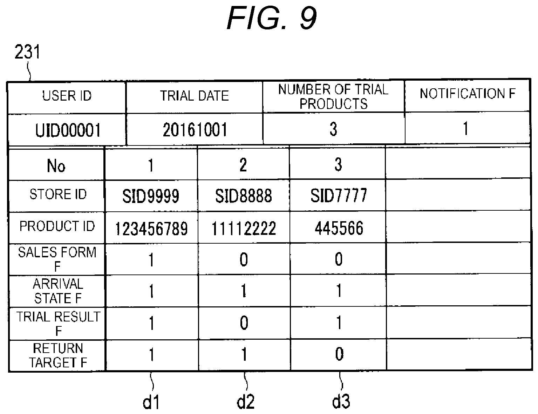

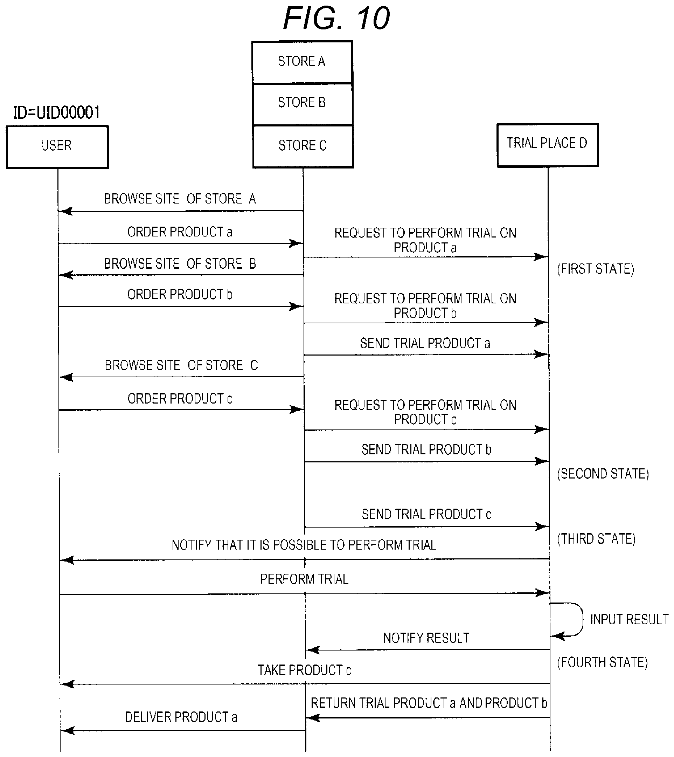

FIG. 6 illustrates a first state of the data stored in the trial management file 231, FIG. 7 illustrates a second state, FIG. 8 illustrates a third state, and FIG. 9 illustrates a fourth state. The first state to the fourth state will be described with reference to FIG. 10.

FIG. 10 is a diagram illustrating an example of principal data interchanged between the user, the store, and the trial place, and movement of the commodity.

In the example of FIG. 10, a user who has a user ID [UID00001] first operates the user terminal 50 to browse a shopping site of a store A and to place an order for a commodity a. When the order is placed, the user operates the user terminal 50 to register a trial place D, which is used to perform a trial on the commodity a, and a trial date [20161001(October 01, 2016)].

Subsequently, the user operates the user terminal 50 to browse a shopping site of a store B and to place an order for a commodity b. When the order is placed, the user operates the user terminal 50 to register the trial place D and the trial date [20161001] in order to perform a trial on the commodity b together with the commodity a.

Subsequently, the user operates the user terminal 50 to browse a shopping site of a store C and to place an order for a commodity c. When the order is placed, the user operates the user terminal 50 to register the trial place D and the trial date [20161001] in order to perform a trial on the commodity c together with the commodity a and the commodity b.

If a store server 10 in the store A receives the order for the commodity a from the user terminal 50 via the network 40, the store server 10 accesses the database server 30 and inquires about a communication address of the trial place D. Furthermore, if the communication address of the trial place D is acquired, the store server 10 transmits a trial request command for the commodity a to the trial place server 20 in the trial place D via the network 40. The trial request command for the commodity a includes a store ID [SID9999] of the store A and a commodity ID [123456789] of the commodity a in addition to the user ID [UID00001] and the trial date [20161001]. Meanwhile, the commodity a is set as the trial commodity.

The trial place server 20 in the trial place D receives the trial request command for the commodity a, and searches the auxiliary storage device 23. At this time, the auxiliary storage device 23 does not store the trial management file 231 with which the user ID [UID00001] and the trial date [20161001] coincide. Furthermore, the trial place server 20 stores the trial management file 231 which includes the user ID [UID00001] and the trial date [20161001]. At this time, the number of trial commodities is [1] and the notification flag is "0". In addition, the trial place server 20 stores trial management data d1 which includes the store ID [SID9999] and the commodity ID [123456789]. Since the number of trial commodities is [1], a serial number of the trial management data d1 is [1]. Since the commodity a is the trial commodity, the sale form flag of the trial management data d1 is "1". The trial place server 20 registers the trial management data d1 in the trial management file 231. FIG. 6 illustrates the content of the trial management file 231 at this point of time. That is, the first state indicates a state in which a trial request command having a new combination of the user ID [UID00001] and the trial date [20161001] is received and the trial management file 231 is generated.

The store servers 10 in the stores B and C operate similar to the store server 10 in the store A. That is, if the store server 10 of the store B receives an order for the commodity b from the user terminal 50, the store server 10 of the store B transmits a trial request command for the commodity b to the trial place server 20 in the trial place D. The trial request command for the commodity b includes a store ID [SID8888] of the store B and a commodity ID [11112222] of the commodity b, together with the user ID [UID00001] and the trial date [20161001]. In this case, the commodity b is set as the selling commodity.

In addition, if a store server 10 in the store C receives an order for the commodity c from the user terminal 50, the store server 10 in the store C transmits a trial request command for the commodity c to the trial place server 20 in the trial place D. The trial request command for the commodity c includes a store ID [SID7777] of the store C and a commodity ID [445566] of the commodity c, together with the user ID [UID00001] and the trial date [20161001]. In this case, the commodity c is set as the selling commodity.

The trial place server 20 in the trial place D receives the trial request command for the commodity b, and searches the auxiliary storage device 23. At this time, the auxiliary storage device 23 stores the trial management file 231 with which the user ID [UID00001] and the trial date [20161001] coincide. Here, the trial place server 20 sets the number of trial commodities to [2]. In addition, the trial place server 20 stores trial management data d2 which includes the store ID [SID8888] and the commodity ID [11112222]. Since the number of trial commodities is [2], a serial number of the trial management data d2 is [2]. Since the commodity b is the selling commodity, a sale form flag of the trial management data d2 is "0". The trial place server 20 registers the trial management data d2 in the trial management file 231 for which the user ID [UID00001] and the trial date [20161001] coincide.

In addition, the trial place server 20 in the trial place D receives the trial request command for the commodity c and searches the auxiliary storage device 23. At this time, the auxiliary storage device 23 stores the trial management file 231 with which the user ID [UID00001] and the trial date [20161001] coincide. Here, the trial place server 20 sets the number of trial commodities to [3]. In addition, the trial place server 20 stores a trial management data d3 which includes the store ID [SID7777] and the commodity ID [445566]. Since the number of trial commodities is [3], a serial number of the trial management data d2 is [3]. Since the commodity c is the selling commodity, a sale form flag of the trial management data d3 is "0". The trial place server 20 registers the trial management data d3 in the trial management file 231 for which the user ID [UID00001] and the trial date [20161001] coincide.

Alternatively, a salesclerk in the store A receives the order from the user, and sends the commodity a to the trial place D. Similarly, a salesclerk in the store B sends the commodity b to the trial place D, and a salesclerk in the store C sends the commodity c to the trial place D.

If the commodity a arrives, an attendant in the trial place D operates the trial place terminal 20T to input the commodity ID [123456789] of the commodity a, the store ID [SID 9999] of the store A, the user ID [UID00001] of the user, the trial date [20161001], and the like. The pieces of information are printed in, for example, a two-dimensional code, in a case where the commodity a is in a package. Otherwise, an RF tag, in which the pieces of information are recorded in an IC chip, may be attached to the commodity a. If information relevant to the commodity a is input, an arrival state flag of the trial management data d1 of the commodity a registered in the trial management file 231, with which the user ID [UID00001] and the trial date [20161001] coincide, is set to "1" in the trial place server 20.

Similarly, if the commodity b arrives, the attendant in the trial place D operates the trial place terminal 20T to input the commodity ID [11112222] of the commodity b, the store ID [SID8888] of the store B, the user ID [UID00001] of the user, the trial date [20161001], and the like. If the information relevant to the commodity b is input, an arrival state flag of the trial management data d2 of the commodity b registered in the same trial management file 231 is set to "1" in the trial place server 20. FIG. 7 illustrates content of the trial management file 231 at this point of time. That is, the second state indicates a state in which some of the commodities have arrived at the trial place among commodities for which the user ordered in order to perform trial to the store.

Thereafter, if the commodity c arrives, the attendant in the trial place D operates the trial place terminal 20T to input the commodity ID [445566] of the commodity c, the store ID [SID7777] of the store C, the user ID [UID00001] of the user, the trial date [20161001], and the like. If the information relevant to the commodity c is input, an arrival state flag of the trial management data d3 of the commodity c registered in the same trial management file 231 is set to "1" in the trial place server 20. As a result, since all of the commodities on which the user who has the user ID [UID00001] will perform trial by designating the same trial date [20161001] have arrived and are stored, the notification flag of the same trial management file 231 is set to "1". FIG. 8 illustrates content of the trial management file 231 at this point of time. That is, the third state indicates a state in which all the commodities, for which the user ordered to perform a trial, have arrived at the trial place.

If a notification flag of the trial management file 231d is set to "1", the trial place server 20 accesses the database server 30, and inquires about a mail address of the user who is identified by using the user ID [UID00001] stored in the same trial management file 231. If the mail address is acquired, the trial place server 20 prepares an e-mail which notifies that it is possible to perform trial because the commodities on which trial will be performed are stored, and transmits the e-mail to the acquired mail address via the network 40.

The user who receives the e-mail goes to the trial place D and performs the trial on the commodity a, the commodity b, and the commodity c. Furthermore, for example, if the user determines to purchase the commodity a and the commodity c and to return the commodity b, the user or the attendant inputs, to the trial place terminal 20T, the determination to purchase the commodity a and the commodity c and to return the commodity b. FIG. 9 illustrates content of the trial management file 231 at this point of time. That is, since the commodity a is purchased, the trial result flag is set to "1". In addition, since the commodity a will be returned because the commodity a is the trial commodity, the return target flag is set to "1". Since the commodity b will not be purchased, the trial result flag is set to "0". In addition, since the commodity b will be returned, the return target flag is set to "1". Since the commodity c will be purchased, the trial result flag is set to "1". In addition, since the commodity c is the selling commodity, it is possible for the user to take the commodity c. Therefore, the return target flag is set to "0". That is, the fourth state indicates a state of accepting a selection input indicative of whether the user keeps or returns the commodity on which trial is performed.

The user who ends the trial takes the commodity c. The attendant in the trial place returns the commodity a and the commodity b to the stores A and B, respectively. In addition, the data of the trial management file 231 in the fourth state is notified to the store servers 10 in the respective stores A, B, and C. If the notification is received, a selling commodity corresponding to the commodity a in the store A is sent to the user.

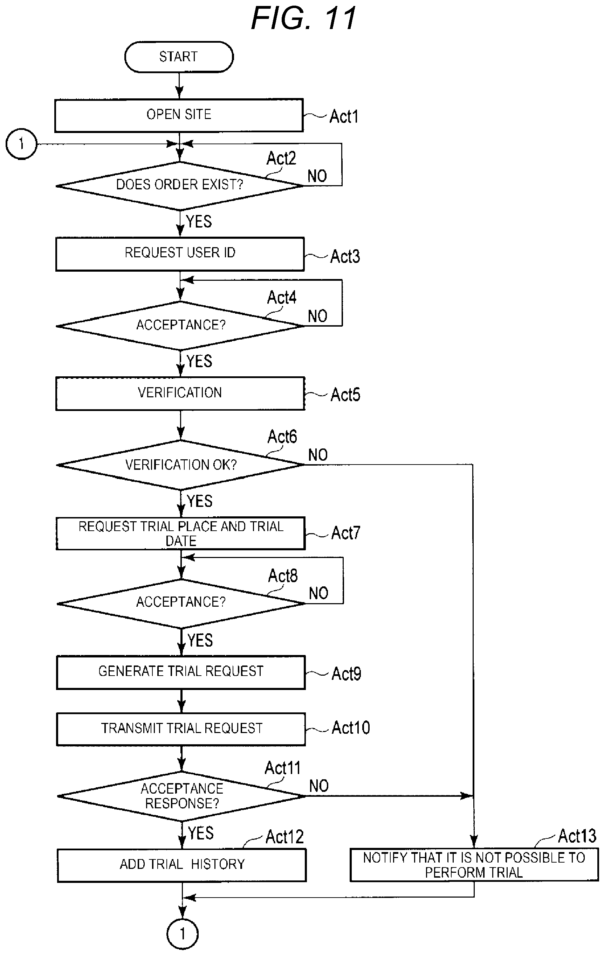

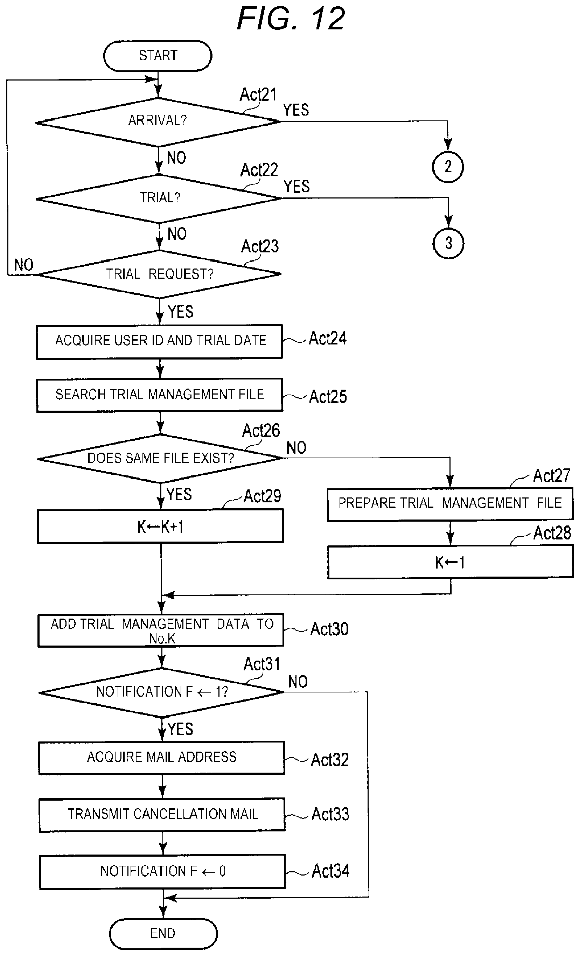

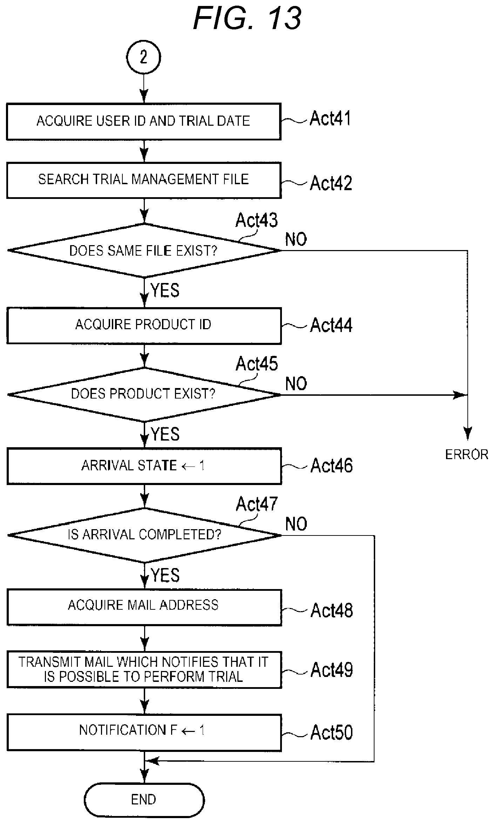

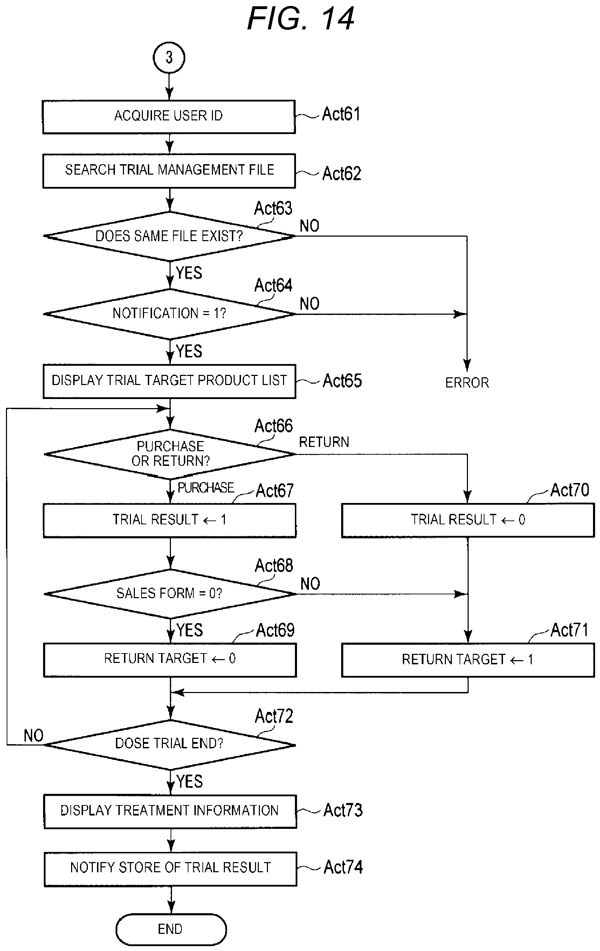

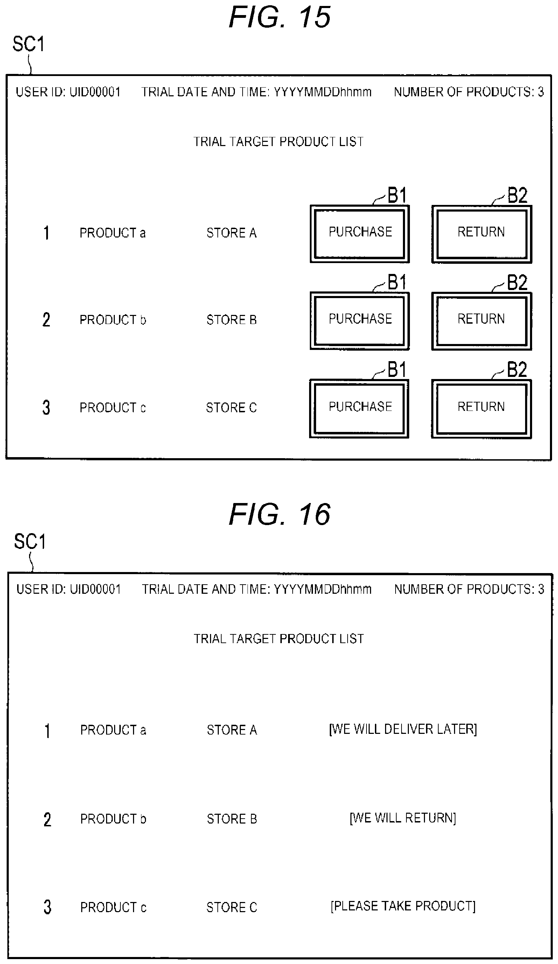

Subsequently, processes which are respectively performed by the processor 11 of the trial place server 10 and the processor 21 of the trial place server 20 in order to realize the interchange of the data and the movement of the commodity which are described with reference to FIG. 10, will be described with reference to FIGS. 11 to 16. FIG. 11 is a flowchart illustrating the procedure of the process performed by the processor 11 of the store server 10. FIGS. 12 to 14 are flowcharts illustrating the procedure of the process performed by the processor 21 of the trial place server 20. FIGS. 15 and 16 illustrate examples of a screen displayed on the display device 20D of the trial place server 20.

First, the process performed by the processor 11 of the store server 10 will be described with reference to FIG. 11. The process is based on a predetermined control program stored in the main memory 12 or the auxiliary storage device 13. Meanwhile, the process, which is illustrated in FIG. 11 and which will be described below, is an example. If it is possible to acquire a similar result, the process is not particularly limited.

The processor 11 opens a shopping site on the network 40 (Act 1). Furthermore, the processor 11 waits for a commodity order command via the network 40 (Act 2). The order command is issued from the user terminal 50. The order command includes a commodity ID of a commodity to be ordered. If the order command is received (Act 2, YES), the processor 11 requests for a user ID at the user terminal (hereinafter, referred to as the user terminal) 50 which issued the order command (Act 3). Furthermore, the processor 11 waits for the user ID via the network 40 (Act 4). The user ID is transmitted from the user terminal 50. If the user ID is received (Act 4, YES), the processor 11 performs verification on the user ID (Act 5). Furthermore, the processor 11 determines whether it is possible to perform the verification (OK) or it is not possible to perform the verification (NG) (Act 6).

That is, the processor 11 accesses the database server 30 via the network 40, and inquires about whether or not the user ID corresponding to a verification target is registered in the user database 33. If a response to the inquiry is provided from the database server 30 indicating the user ID corresponding to the verification target is registered, the processor 11 determines that it is possible to perform the verification (OK). In contrast, if a response to the inquiry is provided from the database server 30 indicating the user ID corresponding to the verification target is not registered, the processor 11 determines that it is not possible to perform the verification (NG).

If it is not possible to perform the verification (Act 6, NO), the processor 11 provides a notification that it is not possible to perform a trial to the user terminal 50 via the network 40 (Act 13). Furthermore, the processor 11 waits for a subsequent order command (Act 2).

In contrast, if it is possible to perform the verification (Act 6, YES), the processor 11 requests a trial place ID and a trial date from the user terminal 50 (Act 7). Furthermore, the processor 11 waits for the trial place ID and the trial date via the network 40 (Act 8). The trial place ID and the trial date are transmitted from the user terminal 50. If the trial place ID and the trial date are received (Act 8, YES), the processor 11 generates a trial request command (Act 9). The trial request command includes the commodity ID included in the order command, the user ID received from the user terminal 50, the trial place ID, the trial date, and the store ID. The store ID is stored in the main memory 12 or the auxiliary storage device 13.

If the trial request command is generated, the processor 11 controls the network interface 15 such that the trial request command is delivered to the trial place servers 20 of the respective trial place systems 200 (Act 10).

Here, the processor 11 which performs the process in Act 10 and the network interface 15 function together as a transmission unit.

The trial place server 20 which receives the trial request command checks whether the trial place ID included in the command coincides with the trial place ID stored in the main memory 22 or the auxiliary storage device 23. Furthermore, if the trial place IDs coincide with each other, the trial place server 20 delivers an acceptance response.

The processor 11, which delivers the trial request command, waits for the acceptance response (Act 11). Furthermore, if the acceptance response is received from any one of the trial place servers 20 in predetermined time after the trial request command is delivered (Act 11, YES), the processor 11 adds the trial history record 132R to the trial history database 132 (Act 12). Furthermore, the processor 11 waits for a subsequent order command (Act 2). The trial history record 132R includes the commodity ID and the user ID included in the trial request command, and the trial place ID of the trial place server 20 which delivers the acceptance response.

In contrast, if the acceptance response is not received in the predetermined time (Act 11, NO), the processor 11 provides a notification that it is not possible to perform trial to the user terminal 50 (Act 13). Furthermore, the processor 11 waits for a subsequent order command (Act 2).

Subsequently, the process which is repeatedly performed by the processor 21 of the trial place server 20 will be described with reference to FIGS. 12 to 14. The procedure is based on the predetermined control program stored in the main memory 22 or the auxiliary storage device 23. Meanwhile, the process, which is illustrated in FIGS. 12 to 14 and which will be described below, is an example. If it is possible to acquire a similar result, the process is not particularly limited.

The processor 21 checks whether or not an arrival mode is selected (Act 21). If the arrival mode is not selected (Act 21, NO), the processor 21 checks whether or not a trial mode is selected (Act 22). If the trial mode is not selected (Act 22, NO), the processor 21 checks whether or not a trial request command (hereinafter, referred to as the trial request command), which includes the trial place ID stored in the main memory 22 or the auxiliary storage device 23, is received (Act 23). If the trial request command is not received (Act 23, NO), the processor 21 checks whether the arrival mode is selected again (Act 21). That is, the processor 21 waits for selection of the arrival mode, selection of the trial mode, and reception of the trial request command in Act 21 to Act 23.

If it is detected that the trial request command issued from any one of the store servers 10 is received via the network interface 25 in waiting states in Act 21 to Act 23 (Act 23, YES), the processor 21 performs a process of receiving the trial request command. That is, the processor 21 acquires the user ID and the trial date included in the trial request command (Act 24). Furthermore, the processor 21 searches the trial management file 231 using the acquired user ID and the trial date (Act 25).

The processor 21 determines whether or not the trial management file (hereinafter, referred to as the trial management file) 231, with which the acquired user ID and the trial date coincide, exists (Act 26). If the trial management file 231 does not exist (Act 26, NO), the processor 21 generates the trial management file 231, which includes the acquired user ID and the trial date (Act 27). Furthermore, the processor 21 sets the number K of trial commodities of the trial management file 231 to "1" (Act 28). In contrast, if the trial management file 231 already exists (Act 26, YES), the processor 21 increases the number K of trial commodities of the trial management file 231 by "1" (Act 29).

If the process in Act 28 or Act 29 ends, the processor 11 adds the trial management data to the trial management file 231 (Act 30). At this time, the number K of trial commodities of the trial management file 231 becomes the serial number of the trial management data.

Here, the processor 21, which performs the processes in Act 23 and Act 24, and the network interface 25 function together as a reception unit. In addition, the processor 21, which performs the processes in Act 25 to Act 30, and the auxiliary storage device 23 function together as a storage unit.

The processor 21 checks whether or not the notification flag of the trial management file 231 is "1" (Act 31). If the notification flag is "0" (Act 31, NO), the processor 21 ends the process of receiving the trial request command. Meanwhile, the process performed when the notification flag is "1" will be described later.

If a commodity arrives at the trial place, the attendant in the trial place operates the input device 20I of the trial place terminal 20T to set an operation mode of the trial place server 20 to an arrival mode. Furthermore, as illustrated with reference to FIG. 10, the attendant operates the scanner 20S of the trial place terminal 20T to input the commodity ID, the store ID, the user ID, the trial date, and the like of the arrived commodity.

If the processor 21 checks that the arrival mode is selected (Act 21, YES), the processor 21 acquires the user ID and the trial date (Act 41). The user ID and the trial date are input from the trial place terminal 20T. The processor 21 searches the trial management file 231 using the user ID and the trial date which are acquired from the trial place terminal 20T (Act 42).

The processor 21 determines the trial management file 231 in which the acquired user ID and the trial date coincide, that is, determines whether or not the trial management file 231 exists (Act 43). If the trial management file 231 exists (Act 43, YES), the processor 21 acquires the commodity ID (Act 44). The commodity ID is input from the trial place terminal 20T. The processor 21 checks whether the trial management data, which includes the acquired commodity ID, exists in the trial management data stored in the trial management file 231 (Act 45).

If the trial management data exists (Act 45, YES), the processor 21 changes the arrival state flag of the trial management data to "1" (Act 46).

The processor 21, which performs the processes in Act 44 to Act 46, functions as an addition unit.

Meanwhile, if the trial management data does not exist (Act 45, NO) or the trial management file 231 does not exist (Act 43, NO), the processor 21 ends the process in the arrival mode as an error.

In Act 46, the processor 21, which changes the arrival state flag to "1", checks whether or not arrival of the commodity corresponding to the trial target is completed (Act 47). That is, the processor 21 checks whether or not the arrival state flags of all the trial management data registered in the trial management file 231 are changed to "1". If at least one arrival state flag of the trial management data is "0", the processor 21 determines that arrival is incomplete. In a case that arrival is incomplete (Act 47, NO), the processor 21 ends the process in the arrival mode.

If all the arrival state flags of the trial management data are changed to "1", the processor 21 that arrival is complete. In a case that arrival is complete (Act 47, YES), the processor 21 accesses the database server 30 via the network 40, and acquires a mail address of the user identified by using the user ID of the trial management file 231 (Act 48). Furthermore, if the mail address is acquired, the processor 21 sets the mail address as a destination, and transmits an e-mail which notifies that it is possible to perform the trial via the network 40 (Act 49).

Here, the processor 21, which performs the processes in Act 47 to Act 49, functions as a contact unit.

After the e-mail which notifies that it is possible to perform trial is transmitted, the processor 21 changes the notification flag of the trial management file 231 to "1" (Act 50). As above, the processor 21 ends the process in the arrival mode. Meanwhile, timing at which the processor 21 changes the notification flag to "1" may be provided before the e-mail which notifies that it is possible to perform trial is transmitted.

As described above, if all the arrival state flags of the trial management data registered in the trial management file 231 are set to "1", the notification flag F is changed to "1", and the e-mail which notifies that it is possible to perform trial is transmitted to the user. However, according to a case, after all the arrival state flags are set to "1", new trial management data may be registered in the trial management file 231 by the processes in Act 23 to Act 30 of FIG. 12.

In this case, since the notification flag is set to "1" (Act 31, YES), the processor 21 performs processes below. That is, the processor 21 accesses the database server 30 via the network 40, and acquires the mail address of the user identified by using the user ID of the trial management file 231 (Act 32). Furthermore, if the mail address is acquired, the processor 21 transmits a cancellation e-mail to the mail address as the destination via the network 40 (Act 33). The cancellation e-mail notifies cancellation of content of the previous e-mail which notified that it was possible to perform trial. The processor 21 returns the notification flag of the trial management file 231 to "0" (Act 34). With this, the processor 21 ends the process performed when the trial request command is received. Meanwhile, timing at which the processor 21 returns the notification flag to "0" may be provided before the cancellation e-mail is transmitted.

If the user visits the trial place in order to perform the trial, the attendant in the trial place operates the input device 20I of the trial place terminal 20T to set the operation mode of the trial place server 20 to the trial mode. Furthermore, the attendant operates the input device 20I or the scanner 20S of the trial place terminal 20T to input the user ID of the user. The user ID is displayed on, for example, a display of a smart phone as a one-dimensional code or a two-dimensional code by dedicated application software. Alternatively, the user ID may be recorded in an IC chip of a contactless IC card issued when the user is registered.

If the processor 21 checks that the trial mode is selected (Act 22, YES), the processor 21 acquires the user ID (Act 61). The user ID is input from the trial place terminal 20T. The processor 21 searches the trial management file 231 using the user ID acquired from the trial place terminal 20T (Act 62).

The processor 21 determines whether or not the trial management file 231, with which the acquired user ID coincides, exists (Act 63). If the trial management file 231, in which the user ID coincides, exists (Act 63, YES), the processor 21 investigates the notification flag of the trial management file 231 in which the user ID coincides (Act 64). Meanwhile, if a plurality of trial management files 231 exist in which the user ID coincides, each of the notification flags are investigated for the plurality of trial management files 231.

Here, if no trial management file 231 in which the notification flag is set to "1" exists (Act 64, NO) or if no trial management file 231 in which the user ID coincides exists (Act 63, NO), the processor 21 determines the process in the trial mode to be an error.

If there is at least one trial management file (hereinafter, referred to as available trial management file) 231 in which the user ID coincides and each corresponding notification flag is set to "1" (Act 64, YES), the processor 21 generates a trial target commodity list image SC1 (see FIG. 15) based on the trial management data of the available trial management file 231. Furthermore, the processor 21 causes the list image SC1 to be displayed on the display device 20D of the trial place terminal 20T (Act 65).

Here, the processor 21, which performs the process in Act 65, functions as a display unit.

FIG. 15 illustrates an example of the list image SC1. FIG. 15 illustrates the list image SC1 in a case of the example described with reference to FIG. 10. As illustrated in the drawing, in the list image SC1, respective names of the commodity a, the commodity b, and the commodity c which are the trial targets and the store names of the stores are displayed. In addition, images of purchase buttons B1 and return buttons B2 are displayed in association with the names of the respective commodities. Here, as described with reference to FIG. 10, a case is assumed where the user purchases the commodity a and the commodity c and returns the commodity b because the commodity b is not purchased. In this case, the user or the attendant in the trial place operates the input device 20I of the trial place terminal 20T to input the purchase button B1 for the commodity a. In addition, the return button B2 is input for the commodity b. In addition, the purchase button B1 is input for the commodity c.

The processor 21 waits for input of the purchase button B1 or the return button B2 (Act 66). Furthermore, if it is detected that the purchase button B1 is input due to a signal from the trial place terminal 20T (Act 66, purchase), the processor 21 sets the trial result flag, which is included in the trial management data of the commodity displayed in the list image SC1 in association with the purchase button B1, to "1" (Act 67). In addition, the processor 21 investigates the sale form flag included in the trial management data (Act 68). Furthermore, if the sale form flag is set to "0", that is, in a case of indicating the selling commodity (Act 68, YES), the processor 21 sets the return target flag included in the trial management data to "0" (Act 69). In contrast, if the sale form flag is set to "1", that is, in a case of indicating the trial commodity (Act 68, NO), the processor 21 sets the return target flag included in the trial management data to "1" (Act 71).

In contrast, if it is detected that the return button B2 is input due to the signal from the trial place terminal 20T (Act 66, return), the processor 21 sets the trial result flag, which is included in the trial management data of the commodity displayed in the list image SC1 in association with the return button B2, to "0" (Act 70). In addition, the processor 21 sets the return target flag included in the trial management data to "1" (Act 71).

If the process in Act 69 or Act 71 ends, the processor 21 determines whether or not the purchase button B1 or the return button B2 is input with respect to all of the trial target commodities (Act 72). That is, the processor 21 determines whether or not a commodity corresponding to non-input of the button exists. For example, the processor 21 determines whether or not all the trial result flags of the trial management data registered in the available trial management file 231 are set to "1" or "0". If at least one of the trial result flags of the trial management data is not set to "1" or "0", the processor 21 determines that the commodity corresponding to non-input of the button exists. If the commodity corresponding to non-input of the button exists (Act 72, NO), the processor 21 returns to the process in Act 66. Furthermore, the processor 21 waits for the purchase button B1 or the return button B2 to be input with respect to the commodity corresponding to non-input of the button.

Here, the processor 21, which performs the processes in Act 66 to Act 72, functions as an accepting unit.

In contrast, if all the trial result flags of the trial management data are set to "1" or "0", the processor 21 determines that the commodity corresponding to non-input of the button does not exist. If it is determined that the commodity corresponding to non-input of the button does not exist (Act 72, YES), the processor 21 causes treatment information of each trial target commodity to be displayed in the list image SC1 (Act 73).

FIG. 16 is an example of the list image SC1 in which the treatment information is displayed. The treatment information is displayed instead of the purchase button B1 and the return button B2. The treatment information includes information "We will deliver later" provided if purchase is instructed with respect to the trial commodity, information "We will return" if return is instructed, and information "Please take the commodity" if purchase is instructed with respect to the selling commodity. The attendant who checks the treatment information may treat the commodity in accordance with the information.

The processor 21, which causes the treatment information to be displayed, notifies the store which supplies the commodity to the trial place of the trial result (Act 76). That is, the processor 21 acquires the store ID for each trial management data registered in the available trial management file 231. Furthermore, the processor 21 accesses the database server 30 via the network 40, and acquires a communication address of the store identified by using the store ID. Furthermore, the processor 21 transmits the trial management data to the communication address as the destination. At this time, the processor 21 transmits the trial management data after adding the trial place ID stored in the main memory 22 or the auxiliary storage device 23, the user ID of the available trial management file 231, and the date and time (trial date and time) clocked by the clock 26.

Here, the processor 21, which performs the process in Act 74, functions as a notification unit.

The store server 10, which receives the trial management data, searches the trial history database 132. Furthermore, the trial date and time and the trial result are registered in the trial history record which includes the commodity ID from the trial management data and the trial place ID and the user ID which are added to the trial management data. If the trial result flag is set to "1" and the return target flag is set to "0", the trial result becomes "sale". If the trial result flag is set to "1" and the return target flag is set to "1", the trial result becomes "order". If the trial result flag is set to "0" and the return target flag is set to "1", the trial result becomes "return".

As described above, according to the trial system 1 of the embodiment, it is possible for the user to determine whether or not to purchase a plurality of commodities which are respectively sold on different shopping sites after performing a trial on the commodities in a common trial place designated by the user. However, since the attendant in the trial place, instead of the user, performs the operation of returning the commodity on which trial is performed, the user does not feel inconvenienced.

In addition, according to the trial system 1, if all commodities ordered by the user are stored in the trial place, an e-mail, which notifies that it is possible to perform trial, is automatically transmitted to the user terminal 50 of the user from the trial place server 20. Therefore, it is possible for the user to know the ordered commodities are ready for trial in the trial place. In addition, it is not necessary for the attendant in the trial place to contact the user to notify that the ordered commodities are ready for trial in the trial place.

In addition, according to the trial system 1, if the user determines to purchase the commodity on which the trial is performed, it is automatically determined whether the commodity is the trial commodity or the selling commodity in the trial place server 20. Furthermore, in the case of the selling commodity, the trial place server 20 notifies the store server 10 that the user can take the commodity. In contrast, in the case of the trial commodity, the trial place server 20 notifies the store server 10 that an order of the commodity is received. Therefore, when notification that the order is received is provided after sending the commodity, on which the user performs trial, to the trial place, the store may send the commodity for which the order is received by the user. Furthermore, since the attendant exists in the location (trial place) where the user performs trial, it is not necessary to worry about that the user illegally takes the commodity. Here, since the store sends the selling commodity to the trial place instead of the trial commodity even if the trial request is provided, it is possible to reduce labors for sending the commodity to the user afterwards.

Hereinafter, a modified example of the embodiment will be described.

In the embodiment, if the order command is received in Act 2 of FIG. 11, the processor 21 performs verification of the user ID. Timing at which the processor 21 performs verification of the user ID is not limited thereto. The processor 21 may wait for the order command if it is possible to perform the verification after performing verification on the user ID before the order command is received.

In the embodiment, the database server 30 is connected to the network 40 and the database server 30 manages the store database 31, the trial place database 32, and the user database 33. However, any one of the store server 10 and the trial place server 20 may perform a function as the database server 30. In addition, the database server 30 may perform function of any one of the store server 10 and the trial place server 20.

In the embodiment, a case where the store terminal 10T is connected to the store server 10 and the trial place terminal 20T is connected to the trial place server 20, respectively, is illustrated. However, the terminals may be omitted in such a way that the servers 10 and 20 include devices included in the terminals 10T and 20T.

In the embodiment, images of the purchase button B1 and the return button B2 are displayed in the list image SC1 in association with the respective names of the respective trial target commodities. However, for example, it is possible to display images of the purchase button B1 and the return button B2 one by one regardless of the trial target commodities, and to select the commodity names displayed in a list. Furthermore, the purchase button B1 may be input in a case of purchasing a commodity corresponding to the selected commodity name, and the return button B2 may be input in a case of returning the commodity.

Meanwhile, assignment of the store server 10 and the trial place server 20 is generally performed in a state in which the control program is stored in the main memory or the auxiliary storage device. However, the embodiment is not limited thereto, and the assignment may be performed in a state in which the program is not stored in the main memory or the auxiliary storage device. Furthermore, in this case, the control program, which is assigned separately from the store server 10 and the trial place server 20, is written in a writable storage device included in the store server 10 and the trial place server 20 according to an operation performed by the user or the like. It is possible to provide the control program by recording the control program in a removable recording medium or by communication via the network. A form of the recording medium does not matter if the recording medium can store a program and can be read by the device like a CD-ROM, a memory card, and the like. In addition, with regard to a function acquired by installing and downloading the program, the function may be realized by cooperating the operating system (OS) or the like inside the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A system for managing trial commodity usage, the system comprising:
a first server provided in a store that receives a request for a commodity trial from a requestor and sends a commodity-for-trying that is a commodity corresponding to the request to a specified trial place;
a second server provided in the specified trial place, wherein:
the first server is configured to:
transmit a trial request command which includes: a commodity identification corresponding to the commodity, requester identification corresponding to the requester, to the second server, and a sale form flag indicating whether the commodity-for-trying corresponding to the request and sent to the specified trial place is a trial commodity or a selling commodity and
the second server is configured to:
receive the trial request command transmitted from the first server,
store the commodity identification included in the received trial request command, in association with the requester identification,
accept a selection input indicating, based on a trial of the commodity-for-trying sent to the specified trial place, whether the requestor will purchase the commodity,
determine, based on the sale form flag and the selection input corresponding to the commodity, whether the commodity-for-trying should be kept by the requestor or returned to the store, and
transmit, to the first server, treatment information indicating whether the requestor will purchase the commodity and whether the commodity-for-trying should be kept by the requestor or returned to the store.

2. The system according to claim 1, wherein the second server is further configured to:
store, in correspondence with the requestor identification, an arrival state flag indicating whether the commodity-for-trying is received at the specified trial place, and a message destination for the requestor, and
when the arrival state flag indicates that the commodity-for-trying is received at the specified trial place, transmit a message to the message destination indicating that the trial of the commodity-for-trying is available for the trial at the specified trying place.

3. The system according to claim 2, wherein the second server is further configured to:
receive one or more additional trial request commands that each include a different commodity identification and the same requestor identification, and
transmit the message when the arrival state flag, for each commodity information stored in correspondence with the requestor information, indicates that the trial of the commodity-for-trying is available for the trial at the specified trying place.

4. The system according to claim 2 or 3, wherein the second server is further configured to:
receive a commodity arrival input when the commodity-for-trying arrives at the selected trying place, the arrival state flag being set to indicate that the commodity-for-trying is received at the specified trial place when the commodity arrival input is received.

5. The system according to any one of claims 1 to 4, wherein, when the sale form flag indicates that the commodity-for-trying is the trial commodity, the second server determines that the commodity-for-trying should be returned to the store regardless of the selection input.

6. The system according to claim 5, wherein, when the sale form flag indicates that the commodity-for-trying is the selling commodity and when the selection input indicates the requestor will purchase the commodity, the second server determines that the commodity-for-trying should be kept by the requestor.

7. The system according to claim 6, wherein, when the sale form flag indicates that the commodity-for-trying is the selling commodity and when the selection input indicates the requestor will not purchase the commodity, the second server determines that the commodity-for-trying should be returned to the store.

8. The system according to claim 5, wherein, when the sale form flag indicates that the commodity-for-trying is the trial commodity and when the selection input indicates the requestor will purchase the commodity, the treatment information indicates that the store should send the commodity to the requestor.

9. The system according to any one of claims 1 to 8, wherein the store receives the request for the commodity trial via a website in accordance with access from a user terminal corresponding to the requestor.

10. The system according to any one of claims 1 to 9, wherein the store receives the request for the commodity trial from a point of sales terminal located in the store.

11. A method for managing trial commodity usage, the method comprising:
receiving a request for a commodity trial from a requestor, the request including a commodity identification corresponding to a commodity, a requestor identification corresponding to the requestor, and a specified trial place;
sending, to the specified trial place, a commodity-for-trying that is the a commodity corresponding to the request;
generating a trial request command which includes: the commodity identification corresponding to the commodity, requester identification corresponding to the requester, and a sale form flag indicating whether the commodity-for-trying corresponding to the request and sent to the specified trial place is a trial commodity or a selling commodity;
storing the commodity identification included in the received trial request command, in association with the requester identification;
accepting, at the specified trial place, a selection input indicating, based on a trial of the commodity-for-trying sent to the specified trial place, whether the requestor will purchase the commodity;
determining, based on the sale form flag and the selection input corresponding to the commodity, whether the commodity-for-trying should be kept by the requestor or returned; and
outputting treatment information indicating whether the requestor will purchase the commodity and whether the commodity-for-trying should be kept by the requestor or returned.

12. The method according to claim 11, further comprising:
storing, in correspondence with the requestor identification, an arrival state flag indicating whether the commodity-for-trying is received at the specified trial place, and a message destination for the requestor; and
when the arrival state flag indicates that the commodity-for-trying is received at the specified trial place, outputting a message to the message destination indicating that the trial of the commodity-for-trying is available for the trial at the specified trying place.

13. The method according to claim 12, further comprising:
receiving one or more additional trial request commands that each include a different commodity identification and the same requestor identification; and
outputting the message when the arrival state flag, for each commodity information stored in correspondence with the requestor information, indicates that the trial of the commodity-for-trying is available for the trial at the specified trying place.

14. The method according to claim 12, further comprising:
receiving a commodity arrival input when the commodity-for-trying arrives at the selected trying place, the arrival state flag being set to indicate that the commodity-for-trying is received at the specified trial place when the commodity arrival input is received.

15. A non-transitory computer readable medium storing a program causing a computer to execute the method according to any one of claims 11 to 14.
